# EUROPEAN PATENT SPECIFICATION

(11) **EP 1 497 011 B1**
(45) Date of publication and mention of the grant of the patent: **20.02.2008**
(21) Application number: 03730306.2
(22) Date of filing: 23.04.2003
(51) Int. Cl.: B01D 46/00, B01D 39/20

(54) **FILTER ELEMENTS**
FILTERELEMENTE
ELEMENTS DE FILTRE

(30) Priority: 23.04.2002 GB 0209183
(43) Date of publication of application: 19.01.2005
(73) Proprietor: Madison Filter 981 Limited, Lancashire BB4 4EJ (GB); SUMITOMO HEAVY INDUSTRIES, LTD., Nishitokyo City, Tokyo 188-8585 (JP)
(72) Inventor: Akerman, David Anthony, Manchester M20 2FY (GB); Yamada, Morio, Tokorozawa-City, Saitama 359-1141 (JP)
(74) Representative: Wilson Gunn
(86) International application number: PCT/GB2003/001695
(87) International publication number: WO 2003/090900

(56) References cited:
- EP-A- 1 121 968
- EP-A- 1 247 559
- US-A- 4 227 899
- US-A- 5 098 454
- US-A- 5 212 131
- PATENT ABSTRACTS OF JAPAN vol. 017, no. 389 (M-1449), 21 July 1993 (1993-07-21) & JP 05 070808 A (NIPPON SEISEN CO LTD), 23 March 1993 (1993-03-23)

## Description

The present invention relates to filter elements and in particular, but not exclusively, to hollow elongate porous filter elements used for gas filtration.

Waste gas from industrial processes such as municipal waste incinerators is filtered to remove contaminants such as dioxins, furans, nitrous oxides, dust, soot and other toxic and noxious substances, thereby enabling the waste gases to be more safely released into the atmosphere. Traditionally gaseous pollutants have been removed by a process of gas 'scrubbing' by injecting a reactant particulate material into the waste gas which reacts either chemically and/or physically with the gaseous pollutants to produce a particulate reaction product. The waste gas containing the reaction product is then filtered through a barrier filter such as a textile, metal or ceramic medium, with the reaction product and any solid pollutants present being retained as a dust cake on the surface of the filter. This has the disadvantage that it involves the handling and injection of a powder or slurry reactant material and the subsequent removal of the dust cake from the surface of the filter. The dust cake is usually removed by back-pulsing clean air under pressure through the filter which results in an increase in energy requirements for cleaning and for filtration. This is because the dust cake presents a pressure drop penalty as it provides a more impermeable layer to the gas flow, thereby requiring extra energy to pull clean gas through the cake and filter. Furthermore, after cleaning there is no build up of reactant material at the surface of the filter, which in use would provide a reactant bed for the removal of pollutants, this enables pollutants to more readily pass untreated through the filter until the reactant layer can be built-up again.

In order to alleviate this later drawback a method of filtration was developed as described in EP 0 573 209 (Foseco International Limited), which operates by initially passing clean air containing particulate reactant material through a rigid, porous ceramic filter. This enables a layer of reactant material to build-up on the surface of the filter before the filtration of the waste gas commences. The clean air is then replaced by the waste gas and the reaction between the gaseous contaminants and the reactant material occurs at the surface of the filter, with a subsequent build-up of reaction product as a dust cake on the filter's surface. Additional reactant material may be added to the stream of waste gas during the continuing filtration. This process still has the disadvantage that the reactant material together with formation of the dust cake on the surface of the filter presents an impermeable layer requiring additional energy to extract cleaned gas. Also, regular cleaning is still required to periodically remove the dust cake with reduced filtration efficiency after cleaning and increased possibility of untreated gas passing through the filter.

EP 0 573 209 further describes the use of activated carbon or powdered lime as a particulate reactant material to absorb gaseous contaminants such as organic chemicals and acidic gases respectively. However, activated carbon when used in this manner is in the form of a dust, which is particularly messy to handle. Activated carbon which has been used to absorb chemical contaminants is typically regenerated by heating to a high temperature in an inert atmosphere, for example nitrogen. Therefore, when activated carbon is used as a particulate reactant medium, it is not cost effective to also include other particulate reactants to remove additional contaminants, since other particulate material would be then mixed with the activated carbon, with the additional requirement for other separation procedures to isolate the other particulate material from the carbon.

EP 2 242 488 (Mitsubishi Jukogyo Kabushiki Kaisha) describes a ceramic filter coated with several layers of chemicals, such as slaked lime, calcium carbonate and calcium chloride which form a catalytic barrier to extract noxious gaseous chemicals such as hydrogen chloride and nitrogen oxides from waste gas. The filter is a fired ceramic matrix which requires a large amount of energy to produce. Furthermore, it is necessary to coat the filter at least three times, thereby requiring three separate application and subsequent drying stages, thus making the filter expensive to produce. Furthermore, the multi-layered structure would provide a resistance to flow, making it less effective as a filter and requiring additional energy to draw air therethrough. The filter would soon become blocked if additionally used to filter waste gas containing particulate matter. The coatings also present a high possibility of de-lamination during reverse pulse jet-cleaning to remove the accumulated dust cake. Furthermore, acidic vapour may degrade the lime coating causing de-lamination.

EP 648 535 (Coming Incorporated) describes a method of chemically cleaning gas using a high-density honeycomb ceramic filter having particulate reactant material embedded in its pores. The ceramic framework is formed by the extrusion of a honeycomb ceramic material to provide a high strength porous material. The process requires high temperature firing at 1350°C to 1450°C in order to effect fusion of the ceramic particles, followed by a separate impregnation step to insert the reactant material. The manufacturing process is therefore time consuming and requires a large amount of energy. It is described in EP 648 535 that the maximum open porosity, that is the porosity of the honeycomb filter before the reactant material is inserted, is 55%. (This value represents the proportion of the substrate volume which is not solid). The porosity of the structure will therefore be decreased upon insertion of the reactant material into the open part of its structure, leading to a decrease in the filtration characteristics rendering the filter unable to remove both chemical and particulate contaminants at the same time. The high density and thereby low porosity of such a structure only allowing the performance of one function, either absorbing gases or removing particulates.

It is an object of the present invention to provide a filter element which overcomes or alleviates the above described drawbacks.

In accordance with one aspect of the present invention there is provided a filter element comprising a composite homogenous structure of inorganic fibres and reactant, the reactant being fixed into position with an even distribution throughout the filter element, wherein the reactant comprises a catalyst and the filter element has a low density distribution of fibres and reactant with a 70% to 80% porosity. The reactant is a substance which reacts chemically to produce innocuous gaseous molecules or a particulate reaction product. The presence of reactant within the body of the filter has the advantage that the reactant is fixed into position throughout the filter body and consequently removal of the reactant and spent reactant from the surface of the filter is not required giving continuity of protection and improved efficiency of filtration, since the reactant is not accumulated on the surface blinding the filter. Also, since the reactant and spent reactant do not accumulate on the surface, it is possible to add other particulate reactants to the waste gas upstream of the filter to specifically target other pollutants, thereby increasing the number of pollutants which can be removed. The spent other particulate reactants being removed from the surface of the filter in a known manner, for example back-pulsing of air jets. Also, the even distribution of reactant throughout the filter means that the waste gas must pass many more reactant particles upon its passage through the filter when compared to the reactant being merely provided on the filters surface, thereby increasing the probability of reaction and removal of the pollutant. The reactant material also acts as a filler enabling control of the porosity of the finished filter by selection of the quantity of the reactant added. Also, the type of reactant can be selected to best serve a particular filtration application.

In a preferred embodiment the filter element is in the form of an injection-moulded formed structure. It has been found that forming the filter by a process of injection-moulding provides a filter having a considerable increase in porosity, typically 70 to 80% porous due to the low density distribution of the fibres and reactant. Compare this to a maximum of 55% for fired filters such as that described in EP 648 535. The structure of the present invention has the advantage that the filter additionally provides a more efficient dust filter since it remains porous during dust cake build-up. This enables dual function of the filter in that it can eliminate particulate pollutants as well as gaseous pollutants, and requires less frequent cleaning by reverse pulse-jet with consequential decrease in down-time and energy consumption. Also, it has been found that this lower density filter produces lower density dust cake, which is much easier to remove during the cleaning cycle. The less dense filter is also less heavy making it easier to handle. The increase in porosity enabling the clean gas to be more easily drawn therethrough, further decreasing energy requirements. Also, as the filtration cycle proceeds, the low-density, highly porous filter will 'blind' at a much slower rate, ensuring energy consumption remains low.

The inorganic fibres may be selected from the list ceramic fibres, crystalline mineral fibres, amorphous mineral fibres, mineral wool, glass fibres and other fibres with refractory properties. Ceramic fibres may include those comprising alumina, alumino-silicate, calcium silicate or other silicates.

The reactant may be activated carbon and catalyst. The activated carbon is a substance which reacts physically, for example by adsorbing or absorbing the pollutants.

The catalyst may comprise at least one precious metal which may be further supported on metal oxide particles, more preferably alumina particles. The catalyst may comprise at least one precious metal oxide. Preferably the precious metal and/or oxide thereof comprises 0.1 - 1% of the mass of the reactant. More preferably the precious metal is at least one of the group platinum, palladium, ruthenium, aluminium, titanium, tungsten and vanadium.

The activated carbon may be in the form of a powder and/or fibre. Providing the activated carbon powder within the body of the filter eliminates the need to inject it into the waste gas stream, thereby eliminating the problems associated with handling the activated carbon in use. If it becomes necessary to reactivate the carbon, this can be achieved simply by heating the filter element in a nitrogen atmosphere to, for example at least 400°C. This would not present a problem to the ceramic structure since it is capable of withstanding temperatures of at least 800°C, thus providing a cost effective means of recycling the carbon.

The structure may additionally comprise a binder system. This has the advantage of providing structural integrity to the ceramic fibre/reactant mass. The binder system may comprise colloidal dispersion and at least one of cationically modified starch or a flocculant. The flocculant may be selected from the list poly acrylamide, anionic or cationic organics or inorganic complexes. The colloidal dispersion maybe a dispersion selected from the list silica, alumina, titanium dioxide, zinc oxide or zirconium oxide.

In a preferred embodiment the filter element is a hollow, candle shaped filter element, closed at one end. This type of filter element finds application in many existing filtration apparatus. The reactant may comprise 35 to 40% (by mass) of a 1 metre filter element weighing 750 to 800g.

In accordance with a second aspect of the present invention there is provided a method of manufacture of a filter element comprising the steps of dispersing ceramic fibres in water, adding a binder system, mixing, injection-moulding to provide a filter element of the desired shape and leaving the filter element to dry, wherein method further includes the step of dispersing a reactant throughout the filter element, wherein the reactant comprises a catalyst and the filter element has a low density distribution of fibres and reactant with a 70% to 80% porosity. This method is relatively cheap since high temperature firing is not required, the injection-moulding may occur at room temperature and subsequent heating at a temperature to dry the formed element. Also, forming the filter by injection-moulding provides a filter of comparatively low density and consequently high porosity.

In a preferred embodiment the step of dispersing includes dispersing a reactant in said water. In a further preferred embodiment the step of dispersing said reactant includes the step of saturating the formed filter in a reactant. The reactant maybe in the form of a dilute aqueous solution or a suspension and the step of saturating may take place either before, during or after drying the filter element.

The reactant may comprise activated carbon, the filter element thus produced comprises activated carbon in an easily handled form, in that it is fixed within the body of the filter, and thus eliminates the problems associated with adding activated carbon in particulate form to a waste gas stream and also the consequential removal of spent carbon from the surface of the filter.

The method may include the additional step of dipping the formed filter element into a dilute colloidal dispersion. Dipping may be conducted before or after the filter element has been dried.

By way of example only specific embodiments of the invention will now be described.

In a first embodiment, 15kg of alumino-silicate ceramic fibre and 2kg activated carbon powder are dispersed in 1000kg of water. 3.7kg of colloidal silica (35% solids) is then added and the ingredients mixed to ensure adequate dispersion. 0.8kg of cationic modified starch is then added as a 4% solution, after being dissolved previously in 20kg of water. Candle-shaped filter elements, closed at one end, are formed by a process of injection-moulding the slurry to provide a filter element 1m long with an internal diameter of 35mm. The wet candles are subsequently dried at 110°C for eight hours to provide a finished filter element.

In a second embodiment, 10kg of alumino-silicate ceramic fibre and 7.5kg activated carbon powder are dispersed in 1000kg of water. 6.81 kg of colloidal silica (35% solids) is added and the resultant solution mixed. 0.8kg of cationically-modified starch is then added as a 4% solution (dissolved in 20kg of water) and the resultant solution mixed at slow speed for a couple of minutes. 0.01kg of polyacrylamide cationic flocculant is then added as 1kg of 1% w/w solution, having been previously dissolved and prepared according to manufacturers' instructions. The resultant solution is then mixed for two minutes and candle-shaped filter elements formed as described with respect to the first embodiment.

In a further embodiment the method includes the additional step of dipping either of the filter elements formed as described above in a dilute colloidal dispersion.

Although activated carbon has been described as the reactant material for absorbing contaminants, the reactant material could be or additionally include a catalyst which acts on the contaminant to degrade them into harmless smaller molecules. The catalyst is added to the fibre slurry, in the same way as the activated carbon, and flocculated using a colloid/starch binder system. The catalyst would thus be homogeneously dispersed within the filter element, which can be formed by injection-moulding as described with respect to the first embodiment.

The reactant has been described as being dispersed in the water with the ceramic fibres. However, the reactant may additionally or alternatively be applied after the filter element has been formed by way of a dilute aqueous solution or suspension, which saturates the element whereby the reactant is dispersed throughout the entire element body. This application may be immediately after injection-moulding when the element is still damp, or after the drying stage.

Although specific formulae have been described, it is to be understood that other proportions of the ingredients and/or alternative ingredients could be provided to produce a ceramic filter in which the activated carbon and/or catalyst is evenly distributed throughout the structure thereof. Although activated carbon powder has been described it is to be understood the filter may alternatively comprise activated carbon fibres, or a mixture of activated carbon fibres and activated carbon powder. The type of activated carbon and/or catalyst may be chosen specifically to have a high affinity for the target gaseous chemical(s).

The presently described filter element has significantly lower energy requirements compared to known filters and it has a porosity of 75 to 80% which provides a high through put of the gas stream, even when a dust cake has built-up on the outer surface of the filter element, as well as a superior cake release due to decreased cake density, ensuring it is easily dislodged by reverse pulse-jet cleaning.

Also, the present filter element can effectively remove gaseous contaminants from a gas stream while simultaneously retaining enough permeability to function as an exceptional filter of particulates, a function not demonstrated by previously known filters. This is possible because the removal of gaseous contaminants does not impinge on the removal of particulates, and visa versa and in that the reactant material and dust cake are easily isolated for further regeneration or processing. The dust cake may be removed by conventional means such as the back pulse of a high pressure air jet. When the reactive material is activated carbon, the carbon may be reactivated by heating the filter element in a high temperature nitrogen atmosphere. In a further embodiment the filtration filter element(s) is utilised in a filtration apparatus for the treatment of waste gas, the filtration apparatus comprising means to supply high temperature nitrogen to the filter element(s) to regenerate the carbon within the filters.

Although a candle-shaped filter of a specific size has been described, it is to be understood that other sizes of candle shaped filters could be produced or alternative shaped filters could be formed by injection-moulding to provide a composite filter structure of ceramic fibres and reactant material. Although ceramic fibres have been described, the filter element could be constructed from other refractory inorganic fibres or a combination thereof.

## Claims

1. A filter element comprising a composite homogenous structure of inorganic fibres and reactant, the reactant being fixed into position with an even distribution throughout the filter element, **characterised in that** the reactant comprises a catalyst and the filter element has a low density distribution of fibres and reactant with a 70 to 80% porosity.

2. A filter element as claimed in claim 1, wherein the filter element is a structure which has been formed by a process of injection-moulding.

3. A filter element as claimed in claim 1 or 2, wherein the inorganic fibres are selected from the group ceramic fibres, crystalline mineral fibres, amorphous mineral fibres, mineral wood, glass fibres and fibres with refractory properties.

4. A filter element as claimed in claim 1 or 2, wherein the inorganic fibres include ceramic fibres selected from the group alumina, alumina-silicate, calcium silicate and silicates.

5. A filter element as claimed in any one of the preceding claims, wherein the reactant comprises activated carbon and a catalyst.

6. A filter element as claimed in claim 5, wherein the activated carbon is in the form of a powder and/or fibre.

7. A filter element as claimed in claim 1, wherein the catalyst comprises at least one precious metal and/or precious metal oxide.

8. A filter element as claimed in claim 1, wherein the catalyst comprises at least one precious metal supported on metal oxide particles.

9. A filter element as claimed in claim 7 or 8, wherein the precious metal and/or oxide thereof comprises 0.1 to 1% of the mass of the reactant.

10. A filter element as claimed in claim 7, 8, or 9, wherein the precious metal and/or precious metal oxide is at least one of the group platinum, palladium, ruthenium, aluminium, titanium, tungsten, and vanadium.

11. A filter element as claimed in any one of the preceding claims, comprising a binder system.

12. A filter element as claimed in claim 11, wherein the binder system comprises colloidal dispersion and at least one cationically modified starch or a flocculant.

13. A filter element as claimed in claim 12, wherein the colloidal dispersion contains at least one from the group silica, alumina, titanium dioxide, zinc oxide or zirconium oxide.

14. A filter element as claimed in claim 12 or 13, wherein the flocculant is selected from the group poly acrylamide, anionic or cationic organics or inorganic complexes.

15. A filter element as claimed in any one of the preceding claims, wherein the filter element is a hollow, candle shaped filter element, closed at one end.

16. A filter element as claimed in claim 15, wherein the reactant comprises 35 to 40% (by mass) of a 1 metre filter element weighing 750 to 800g.

17. A method of manufacture of a filter element comprising the steps of:
(a) dispersing ceramic fibres in water;
(b) adding a binder system;
(c) mixing;
(d) injection-moulding to provide a filter element of the desired shape; and
(e) leaving the filter element to dry, wherein the method further includes the step of dispersing a reactant throughout the body of the filter element, wherein the reactant comprises a catalyst and the filter element has a low density distribution of fibres and reactant with a 70 to 80% porosity.

18. A method according to claim 17, wherein the step of dispersing said reactant is by dispersing said reactant in said water.

19. A method according to claim 17 or 18, wherein said step of dispersing said reactant is by saturating said formed filter element in a reactant.

20. A method according to claim 19, wherein said saturating reactant is applied in the form of a dilute aqueous solution or a suspension.

21. A method according to claim 19 or 20, wherein said step of saturating is performed before said step of drying.

22. A method according to anyone of claim 17 to 21, wherein the reactant comprises activated carbon.

23. A method according to anyone of claims 17 to 22, including the additional step of dipping said formed filter element into a dilute colloidal dispersion.

## Patentansprüche

1. Filterelement, das eine homogene Verbundstruktur aus anorganischen Fasern und Reaktant umfasst, wobei der Reaktant mit einer gleichmäßigen Verteilung über das gesamte Filterelement in Position fixiert ist, **dadurch gekennzeichnet, dass** der Reaktant einen Katalysator umfasst und das Filterelement eine Verteilung geringer Dichte der Fasern und des Reaktanten mit einer Porosität von 70 bis 80 % aufweist.

2. Filterelement nach Anspruch 1, wobei das Filterelement eine Struktur ist, die mittels eines Spritzgussverfahrens geformt wurde.

3. Filterelement nach Anspruch 1 oder 2, wobei die anorganischen Fasern aus der Gruppe aus Keramikfasern, kristallinen Mineralfasern, amorphen Mineralfasern, Mineralholz, Glasfasern und Fasern mit Feuerbeständigkeitseigenschaften ausgewählt sind.

4. Filterelement nach Anspruch 1 oder 2, wobei die anorganischen Fasern Keramikfasern enthalten, die aus der Gruppe aus Aluminiumoxid, Aluminiumoxid-Silikat, Calciumsilikat und Silikaten ausgewählt sind.

5. Filterelement nach einem der vorhergehenden Ansprüche, wobei der Reaktant Aktivkohle und einen Katalysator umfasst.

6. Filterelement nach Anspruch 5, wobei die Aktivkohle in der Form eines Pulvers und/oder von Fasern ist.

7. Filterelement nach Anspruch 1, wobei der Katalysator mindestens ein Edelmetall und/oder ein Edelmetalloxid umfasst.

8. Filterelement nach Anspruch 1, wobei der Katalysator mindestens ein Edelmetall umfasst, das auf Metalloxidteilchen geträgert ist.

9. Filterelement nach Anspruch 7 oder 8, wobei das Edelmetall und/oder das Oxid davon 0,1 bis 1 % der Masse des Reaktanten ausmacht.

10. Filterelement nach Anspruch 7, 8 oder 9, wobei das Edelmetall und/oder das Edelmetalloxid mindestens eines der Gruppe Platin, Palladium, Ruthenium, Aluminium, Titan, Wolfram und Vanadium ist.

11. Filterelement nach einem der vorhergehenden Ansprüche, das ein Bindemittelsystem umfasst.

12. Filterelement nach Anspruch 11, wobei das Bindemittelsystem eine kolloidale Dispersion und mindestens eine kationisch modifizierte Stärke oder ein Flockungsmittel umfasst.

13. Filterelement nach Anspruch 12, wobei die kolloidale Dispersion mindestens eines aus der Gruppe aus Siliciumdioxid, Aluminiumoxid, Titandioxid, Zinkoxid oder Zirkoniumoxid enthält.

14. Filterelement nach Anspruch 12 oder 13, wobei das Flockungsmittel aus der Gruppe aus Polyacrylamid, anionischen oder kationischen organischen oder anorganischen Komplexen ausgewählt ist.

15. Filterelement nach einem der vorhergehenden Ansprüche, wobei das Filterelement ein hohles, kerzenförmiges Filterelement ist, das an einem Ende geschlossen ist.

16. Filterelement nach Anspruch 15, wobei der Reaktant 35 bis 40 % (bezogen auf die Masse) eines 1-Meter-Filterelements, das 750 bis 800 g wiegt, ausmacht.

17. Verfahren zur Herstellung eines Filterelements, das die folgenden Schritte umfasst:
(a) Dispergieren von Keramikfasern in Wasser;
(b) Zugeben eines Bindemittelsystems;
(c) Mischen;
(d) Spritzgießen, um ein Filterelement mit der gewünschten Form bereitzustellen; und
(e) Trocknenlassen des Filterelements, wobei das Verfahren weiterhin den Schritt des Dispergierens eines Reaktanten durch den gesamten Körper des Filterelements beinhaltet, wobei der Reaktant einen Katalysator umfasst und das Filterelement eine Verteilung geringer Dichte der Fasern und des Reaktanten mit einer Porosität von 70 bis 80 as aufweist.

18. Verfahren nach Anspruch 17, wobei der Schritt des Dispergierens von genanntem Reaktant durch Dispergieren von genanntem Reaktant in genanntem Wasser erfolgt.

19. Verfahren nach Anspruch 17 oder 18, wobei genannter Schritt des Dispergierens von genanntem Reaktanten durch Sättigen von genanntem geformten Filterelement in einem Reaktanten erfolgt.

20. Verfahren nach Anspruch 19, wobei genannter Sättigungsreaktant in der Form einer verdünnten wässrigen Lösung oder einer Suspension angewendet wird.

21. Verfahren nach Anspruch 19 oder 20, wobei genannter Schritt des Sättigens vor genanntem Schritt des Trocknens durchgeführt wird.

22. Verfahren nach einem der Ansprüche 17 bis 21, wobei der Reaktant Aktivkohle umfasst.

23. Verfahren nach einem der Ansprüche 17 bis 22, das den zusätzlichen Schritt des Eintauchens von genanntem geformtem Filterelement in eine verdünnte kolloidale Dispersion beinhaltet.

## Revendications

1. Elément de filtration comprenant une structure composite homogène de fibres inorganiques et un réactif, le réactif étant fixé dans des positions selon une distribution régulière sur l'ensemble de l'élément de filtration, **caractérisé en ce que** le réactif comprend un catalyseur et **en ce que** l'élément de filtration présente une distribution de faible densité des fibres et du réactif, avec une porosité de 70 à 80 %.

2. Elément de filtration selon la revendication 1, dans lequel l'élément de filtration est une structure que l'on a formée selon un procédé de moulage par injection.

3. Elément de filtration selon la revendication 1 ou 2, dans lequel les fibres inorganiques sont choisies dans le groupe constitué des fibres céramiques, des fibres minérales cristallines, des fibres minérales amorphes, de la laine minérale, des fibres de verre et des fibres ayant des propriétés réfractaires.

4. Elément de filtration selon la revendication 1 ou 2, dans lequel les fibres inorganiques comprennent des fibres céramiques choisies dans le groupe de l'alumine, du système alumine-silicate, du silicate de calcium et des silicates.

5. Elément de filtration selon l'une quelconque des revendications précédentes, dans lequel le réactif comprend du charbon activé et un catalyseur.

6. Elément de filtration selon la revendication 5, dans lequel le charbon activé se présente sous la forme d'une poudre et/ou d'une fibre.

7. Elément de filtration selon la revendication 1, dans lequel le catalyseur comprend au moins un métal précieux et/ou un oxyde de métal précieux.

8. Elément de filtration selon la revendication 1, dans lequel le catalyseur comprend au moins un métal précieux supporté sur des particules d'oxyde de métal.

9. Elément de filtration selon la revendication 7 ou 8, dans lequel le métal précieux et/ou l'oxyde de celui-ci constitue 0,1 à 1 % de la masse du réactif.

10. Elément de filtration selon la revendication 7, 8, ou 9, dans lequel le métal précieux et/ ou l'oxyde de métal précieux est au moins l'un des éléments du groupe comprenant le platine, le palladium, le ruthénium, l'aluminium, le titane, le tungstène et le vanadium.

11. Elément de filtration selon l'une quelconque des revendications précédentes, comprenant un système de liant.

12. Elément de filtration selon la revendication 11, dans lequel le système de liant comprend une dispersion colloïdale et au moins un amidon modifié sous forme cationique ou un agent de floculation.

13. Elément de filtration selon la revendication 12, dans lequel la dispersion colloïdale contient au moins un élément du groupe comprenant la silice, l'alumine, le dioxyde de titane, l'oxyde de zinc ou l'oxyde de zirconium.

14. Elément de filtration selon la revendication 12 ou 13, dans lequel l'agent de floculation est choisi dans le groupe comprenant les complexes de polyacrylamide organiques ou inorganiques, anioniques ou cationiques.

15. Elément de filtration selon l'une quelconque des revendications précédentes, dans lequel l'élément de filtration est un élément de filtration en forme de bougie creuse, fermée à une extrémité.

16. Elément de filtration selon la revendication 15, dans lequel le réactif constitue 35 à 40 % (en masse) d'un élément de filtration de 1 mètre pesant 750 à 800 g.

17. Procédé de fabrication d'un élément de filtration comprenant les étapes suivantes :
(a) la dispersion des fibres céramiques dans de l'eau ;
(b) l'addition d'un système de liant ;
(c) le mélange ;
(d) le moulage par injection, afin d'obtenir un élément de filtration sous la forme souhaitée ; et
(e) le séchage de l'élément de filtration en le laissant reposer, le procédé en question comprenant en outre l'étape de dispersion d'un réactif dans l'ensemble du corps de l'élément de filtration, le réactif comprenant un catalyseur et l'élément de filtration présentant une distribution de faible densité des fibres et du réactif, avec une porosité de 70 à 80 %.

18. Procédé selon la revendication 17, dans lequel l'étape de dispersion dudit réactif est effectuée en dispersant ledit réactif dans de l'eau.

19. Procédé selon la revendication 17 ou 18, dans lequel ladite étape de dispersion dudit réactif est effectuée en saturant, dans un réactif, ledit élément de filtration formé.

20. Procédé selon la revendication 19, dans lequel ledit réactif de saturation est appliqué sous la forme d'une solution aqueuse diluée ou d'une suspension.

21. Procédé selon la revendication 19 ou 20, dans lequel ladite étape de saturation est effectuée avant ladite étape de séchage.

22. Procédé selon l'une quelconque des revendications 17 à 21, dans lequel le réactif comprend du charbon activé.

23. Procédé selon l'une quelconque des revendications 17 à 22, comprenant l'étape supplémentaire qui consiste à immerger ledit élément de filtration formé, dans une dispersion colloïdale diluée.
